# EUROPEAN PATENT APPLICATION

(11) **EP 4 629 411 A1**
(43) Date of publication of application: **08.10.2025**
(21) Application number: 25166513.9
(22) Date of filing: 27.03.2025
(51) Int. Cl.: H01M 50/167, H01M 50/152, H01M 50/107, H01M 10/04

(54) **CRIMPING METHOD OF A CYLINDRICAL SECONDARY BATTERY**

(30) Priority: 03.04.2024 KR 20240045192
(71) Applicant: SAMSUNG SDI CO., LTD., Yongin-si, Gyeonggi-do 17084 (KR)
(72) Inventor: KANG, BONG GEUN, 17084 Yongin-si, Gyeonggi-do, (KR); CHOI, WOO HYUK, 17084 Yongin-si, Gyeonggi-do, (KR); YANG, JUN HO, 17084 Yongin-si, Gyeonggi-do, (KR); PARK, HYUN SUK, 17084 Yongin-si, Gyeonggi-do, (KR); KWON, JUN HWAN, 17084 Yongin-si, Gyeonggi-do (KR); LEE, TAE YOON, 17084 Yongin-si, Gyeonggi-do, (KR); KIM, YOUNG HO, 17084 Yongin-si, Gyeonggi-do, (KR); LIM, SEUNG MAN, 17084 Yongin-si, Gyeonggi-do, (KR)
(74) Representative: Gulde & Partner

(57) **Abstract**

A crimping apparatus configured to form a crimping portion (124) in a cylindrical secondary battery (10). The crimping apparatus includes a protrusion (1a) configured to be inserted into a beading portion (122) of the cylindrical secondary battery (10). A support length (L3) of the protrusion (1a) inserted into the beading portion (122) is approximately 73% to approximately 83% of an indentation depth (L4) of the beading portion (122) in an outer diameter direction of the cylindrical secondary battery (10).

## Description

### BACKGROUND

### 1. Field

Embodiments of the present disclosure relate to a crimping apparatus capable of reducing shaping load and preventing deformation of a cap plate during shaping of a secondary battery and a cylindrical secondary battery manufactured thereby.

### 2. Description of the Related Art

As the demand for high-capacity secondary batteries has increased in recent years, various attempts have been made to increase the size of secondary batteries or to improve an internal structure capable of increasing capacity with the same size.

Depending on the appearance thereof, secondary batteries may be categorized into a prismatic secondary battery, a pouch-shaped secondary battery, or a cylindrical secondary battery. Among those, the cylindrical secondary battery may have a structure in which an electrode assembly is accommodated in a cylindrical can and a beading portion and a crimping portion are provided to couple a cap assembly to an open end of the can.

Shaping the crimping portion may require a high pressure of 6 tons or more. If such pressure accumulates, equipment configured to shape the crimping portion, such as a jig, may be damaged due to cumulative stress. Additionally, high shaping pressure for crimping may lead to deformation of the cap plate, which may reduce the safety of the secondary battery.

The information disclosed in this section is provided only for enhancement of understanding of the background of the present disclosure and therefore it may contain information that does not form the prior art.

### SUMMARY

Embodiments of the present disclosure provide a crimping apparatus capable of reducing shaping load and preventing deformation of a cap plate during shaping of a secondary battery and a cylindrical secondary battery manufactured thereby.

According to an aspect of the invention a method for affixing a cap plate to a can of a cylindrical secondary battery is provided, wherein a beading portion is formed in the can, and the cap plate is placed on the beading portion and is affixed by bending an end of a side portion of the can in the inward direction to form a crimping portion, wherein the method comprises inserting a protrusion into the beading portion prior to bending the crimping portion, wherein a support length of the protrusion inserted into the beading portion is approximately 73% to approximately 83% of an indentation depth of the beading portion in an outer diameter direction of the cylindrical secondary battery. A crimping apparatus according to another aspect of the present invention includes a protrusion protruding so as to be inserted into a beading portion, wherein the support length of the protrusion inserted into the beading portion is 73% to 83% of the indentation depth of the beading portion in an outer diameter direction of a cylindrical secondary battery, in particular when the crimping apparatus performs the method according to the one aspect.

A cylindrical secondary battery according to yet another aspect of the present invention is manufactured by the crimping apparatus, in particular by the crimping apparatus performing the method according to the one aspect, wherein the cap plate has an amount of deformation such that the deformed cap plate forms an angle to the previously undeformed cap plate of less than 10 degree.

The cylindrical secondary battery may include an electrode assembly, a cylindrical can having a circular upper surface portion and a side portion extending from the upper surface portion, the side portion having a beading portion formed adjacent to an end thereof so as to be inwardly recessed and a crimping portion formed by bending an end of the side portion, the can receiving the electrode assembly, and a cap plate coupled between the beading portion and the crimping portion in an insulated state.

The cylindrical secondary battery may further include a gasket inserted between the cap plate and the crimping portion, the gasket insulating the cap plate from the side portion, the gasket being made of an insulating material.

The engagement thickness of the crimping portion, which is the height of the crimping portion from an outer upper end to a lower end thereof, may be 5 to 8% and for example at least 5 % or up to 5,5 %, 6 %, 6,5 %, 7 %, 7,5 % or 8 % of the outer diameter of the can.

The support length of the protrusion may be 60 to 90% of the amount of coverage, which is the length between opposite ends of the crimping portion.

The support length of the protrusion may be 3 to 9% and for example at least 3 % or up to 3,5 %, 4 %, 4,5 %, 5 %, 5,5 %, 6 %, 6,5 %, 7 %, 7,5 %, 8 %, 8,5 % or 9% of the outer diameter of the can.

The electrode assembly may include a first electrode plate and a second electrode plate, and the cylindrical secondary battery may further include a positive electrode terminal coupled to the upper surface portion in an insulated state, the positive electrode terminal being electrically connected to the first electrode plate.

The cylindrical secondary battery may further include a first current collector plate electrically connected to the first electrode plate and the positive electrode terminal and a second current collector plate electrically connected to the second electrode plate and the side portion.

The cylindrical secondary battery may further include a plurality of negative electrode leads electrically connecting the second current collector plate and the side portion to each other.
The support length of the protrusion inserted into the beading portion may be at least 73 % or up to 75 %, 77 %, 79 %, 81 % or 83 %.
The deformed cap plate may form an angle to the previously undeformed cap plate of up to almost 10 degree and for example of less than 10 degrees, 9 degrees, 8 degrees, 7 degrees, 6 degrees, 5 degrees, 4 degrees, 3 degrees or 2 degrees. The previously undeformed cap plate may rest on the beading portion prior to the deformation of the crimping portion e.g. by bending. The angle may be an angle between same surfaces of the undeformed and deformed cap plate, e.g. a surface of the cap plate facing the interior of the cylindrical secondary battery and for example the electrode assembly.

### BRIEF DESCRIPTION OF THE DRAWINGS

FIG. 1 is a perspective view of a cylindrical secondary battery according to an embodiment of the present disclosure;
FIG. 2 is a sectional view of the cylindrical secondary battery shown in FIG. 1;
FIG. 3 is a partial perspective view showing a crimping process included in a process of manufacturing the cylindrical secondary battery shown in FIG. 1;
FIG. 4 is an enlarged sectional view showing a part of the cylindrical secondary battery shown in FIG. 2;
FIG. 5 is an enlarged view of a crimping portion of the cylindrical secondary battery of the embodiment of FIG. 4 compared to a comparative example; and
FIG. 6 is an enlarged sectional view showing a portion of the cylindrical secondary battery during the crimping process shown in FIG. 3.

### DETAILED DESCRIPTION

Embodiments are provided to more fully illustrate the present disclosure to a person having ordinary skill in the art, the following embodiments may be modified in various other forms, and the scope of the present disclosure is not limited to the following embodiments. The embodiments are provided to make the present disclosure more faithful and complete and to completely convey the idea of the present disclosure fully to those skilled in the art.

In the following drawings, the thickness or size of each layer is exaggerated for convenience and clarity of description and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the present disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the present disclosure.

Terms related to space, such as "beneath," "below," "lower," "above," and "upper," may be utilized to facilitate understanding of one element or feature shown in the drawings as different from another element or feature. The terms related to space are intended to facilitate understanding of the present disclosure in various states of process or use and are not intended to limit the present disclosure. For example, if an element or feature in a figure is inverted, an element or feature described as "beneath" or "below" becomes "above" or "upper." Thus, "beneath" is a concept that encompasses "above" or "below".

Hereinafter, a cylindrical secondary battery according to an embodiment of the present disclosure will be described in detail with reference to the accompanying drawings.

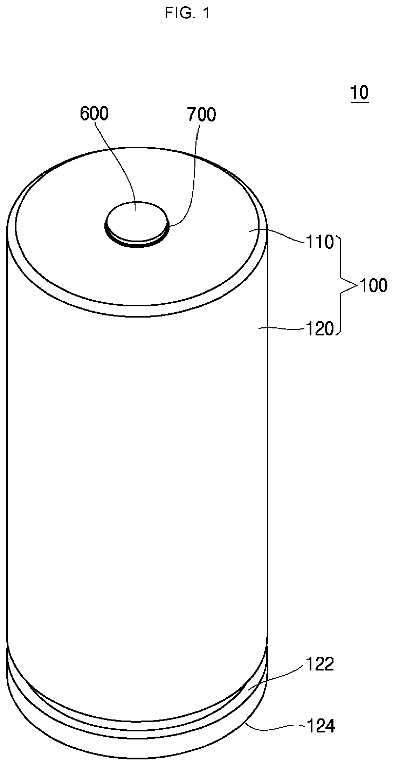

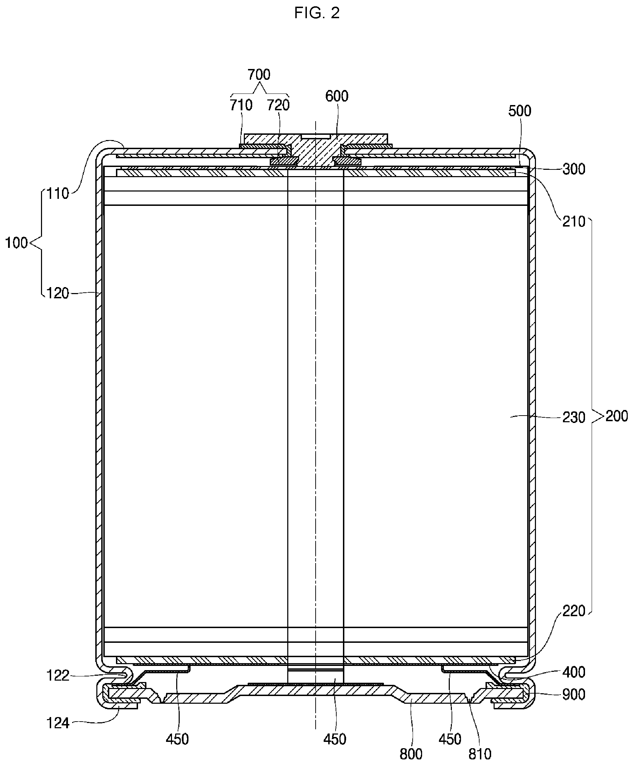

FIG. 1 is a perspective view of a cylindrical secondary battery 10 according to an embodiment of the present disclosure. FIG. 2 is a sectional view of the cylindrical secondary battery 10 shown in FIG. 1.

Referring to FIGs. 1 and 2, the secondary battery 10 according to the embodiment of the present disclosure may include a can 100, an electrode assembly 200, a first current collector plate 300, a second current collector plate 400, a negative electrode lead 450, an insulating member 500, a positive electrode terminal 600, a first gasket 700, a cap plate 800, and a second gasket 900.

Referring to FIGs. 1 and 2, the can 100 may accommodate the electrode assembly 200 and an electrolyte, and may have an approximately cylindrical shape. The can 100 may include a circular upper surface portion 110 and a side portion 120 extending downward from the upper surface portion 110. The positive electrode terminal 600 and the first gasket 700 may be coupled to the upper surface portion 110 of the can 100. A beading portion 122 and a crimping portion 124 may be at the bottom of the side portion 120 of the can 100. While the present embodiment is described with reference to an example in which the bottom of the can 100 is open, in one or more embodiments the top of the can 100 may be open.

Upon assembling the electrode assembly 200 in the can 100, the can 100 may be oriented such that the upper surface portion 110 faces downward, the electrode assembly 200 may be inserted upward into the can 100, and the beading portion 122 may be formed at the can 100. The beading portion 122 may prevent separation of the electrode assembly 200 from the can 100. The beading portion 122 may be formed by bending a lower end of the side portion 120 so as to be recessed in an inward direction (e.g., a radially inward direction) of the can 100. After forming the beading portion 122, the cap plate 800 and the second gasket 900 may be assembled, and the crimping portion 124 may be formed to prevent separation of the cap plate 800 from the can 100. The crimping portion 124 may be formed by bending an end of the side portion 120 in the inward direction (e.g., radially inward direction) of the can 100.

Referring to FIG. 2, the electrode assembly 200 may include a first electrode plate 210, a second electrode plate 220, and a separator 230.

The first electrode plate 210 may be a negative electrode plate or a positive electrode plate. The present embodiment is described with reference to an example in which the first electrode plate 210 is a positive electrode plate. The first electrode plate 210, which is a positive electrode plate, may be made of a highly conductive metal sheet, such as aluminum foil or mesh. The first electrode plate 210 may have a positive electrode coated portion coated with a positive electrode active material and a positive electrode non-coated portion coated with no positive electrode active material. In one or more embodiments, the positive electrode active material may be a chalcogenide compound, e.g., a composite metal oxide such as LiCoO₂, LiMn₂O₄, LiNiO₂, or LiNiMnO₂.

The second electrode plate 220 may be the other of a negative electrode plate or a positive electrode plate. The present embodiment is described with reference to an example in which the second electrode plate 220 is a negative electrode plate. The second electrode plate 220, which is a negative electrode plate, may be made of a conductive metal sheet, such as copper foil, nickel foil, or mesh. The second electrode plate 220 may have a negative electrode coated portion coated with a negative electrode active material and a negative electrode non-coated portion coated with no negative electrode active material. In one or more embodiments, the negative electrode active material may be a carbon-based material, Si, Sn, tin oxide, a tin alloy composite, a transition metal oxide, lithium metal nitride, or a metal oxide.

The separator 230 may be between the first electrode plate 210 and the second electrode plate 220 and be configured to prevent short circuit between the first electrode plate 210 and the second electrode plate 220. In one or more embodiments, the separator 230 may include or may be made of polyethylene, polypropylene, or a porous copolymer of polyethylene and polypropylene.

In one or more embodiments, in the electrode assembly 200, the non-coated portion of the first electrode plate 210 may protrude upward above an upper end of the second electrode plate 220. The non-coated portion of the second electrode plate 220 may protrude downward under a lower end of the first electrode plate 210. The first electrode plate 210 and the second electrode plate 220 may be wound into a jelly-roll shape. In this state, the first current collector plate 300 may be welded to the non-coated portion of the first electrode plate 210, and the second current collector plate 400 may be welded to the non-coated portion of the second electrode plate 220.

Referring to FIG. 2, the first current collector plate 300 may be between the upper surface portion 110 and the non-coated portion of the first electrode plate 210. The first current collector plate 300 may be welded and electrically connected to the first electrode plate 210, which is a positive electrode plate, and therefore the first current collector plate 300 may be a positive electrode current collector plate. The first current collector plate 300 may be approximately disk-shaped. A central part of the first current collector plate 300 may be electrically connected to the positive electrode terminal 600. However, the first current collector plate 300 is insulated from the can 100. Therefore, the plate-shaped insulating member 500 may be provided between the first current collector plate 300 and the can 100.

Referring to FIG. 2, the second current collector plate 400 may be between the cap plate 800 and the non-coated portion of the second electrode plate 220. The second current collector plate 400 may be welded and electrically connected to the second electrode plate 220, which is a negative electrode, and therefore the second current collector plate 400 may be a negative electrode current collector plate. The second current collector plate 400 may be approximately disk-shaped. The second current collector plate 400 may be electrically connected to the side portion 120 of the can 100 via a plurality of negative electrode leads 450. In one or more embodiments, the second current collector plate 400 may be directly welded and electrically connected to the side portion 120 of the can 100 without the negative electrode leads 450.

Referring to FIG. 2, the negative electrode lead 450 may have a plate shape having a predetermined length and width. The negative electrode lead 450 may be a conductor, which may electrically connect the second current collector plate 400 and the side portion 120 of the can 100 to each other. One end of the negative electrode lead 450 may be electrically connected to the second current collector plate 400, and the other end of the negative electrode lead 450 may be between the beading portion 122 and the second gasket 900 so as to be electrically connected to the side portion 120. In one or more embodiments, one end of the negative electrode lead 450 and the second current collector plate 400 may be welded to each other, and the other end of the negative electrode lead 450 may or may not be welded to the side portion 120. Because the negative electrode lead 450 may be fixed by the beading portion 122, the second gasket 900, and the crimping portion 124, welding between the side portion 120 and the negative electrode lead 450 may be omitted. Because the second current collector plate 400 and the negative electrode lead 450 are electrically connected to each other and the negative electrode lead 450 is electrically connected to the side portion 120, the can 100 may serve as a negative electrode. The positive electrode terminal 600 may be insulated from the can 100.

The insulating member 500 may have a hollow disk shape, and may be made of an insulating material. The bottom of the positive electrode terminal 600 and the first current collector plate 300 may be in contact with and electrically connected to each other through an opening or hollow of the insulating member 500. The remaining part of the insulating member 500 excluding the opening or hollow may cover an upper surface of the first current collector plate 300. The insulating member 500 and for example its form may be equal to or larger than the first current collector plate 300.

Referring to FIGs. 1 and 2, the positive electrode terminal 600 may be insulated from the upper surface portion 110 of the can 100 by the first gasket 700. The top of the positive electrode terminal 600 may be exposed to the outside of the upper surface portion 110, and the bottom of the positive electrode terminal 600 may be in contact with and electrically connected to the first current collector plate 300. In one or more embodiments, the positive electrode terminal 600 may be a rivet terminal fixed to the upper surface portion 110 from the inside or the outside of the can 100 by riveting.

Referring to FIGs. 1 and 2, the first gasket 700 may insulate the positive electrode terminal 600 and the can 100 from each other. In one or more embodiments, the first gasket 700 may include an upper gasket 710 configured to insulate the positive electrode terminal 600 and an outer surface of the upper surface portion 110 from each other, and a lower gasket 720 configured to insulate the positive electrode terminal 600 and an inner surface of the upper surface portion 110 from each other. In one or more embodiments, the upper gasket 710 and the lower gasket 720 may be integral (i.e., monolithic). The insulating member 500 may be between the lower gasket 720 and the first current collector plate 300.

Referring to FIG. 2, the cap plate 800 may be an approximately disk-shaped plate, which may be coupled to the side portion 120 via the second gasket 900. The cap plate 800 may include a flat region between the beading portion 122 and the crimping portion 124 (an edge region of the cap plate 800) and a vent region stepped from the flat region (the remaining region of the cap plate 800 other than the flat region). The cap plate 800 may be fixed to the can 100 by the beading portion 122 and the crimping portion 124. The flat region may be fixed by the beading portion 122 and the crimping portion 124. Because the second gasket 900 is between the cap plate 800 and the side portion 120, the cap plate 800 may be insulated from the can 100. Consequently, the cap plate 800 may be neutral (non-polarized), and therefore the cap plate 800 may not have the polarity of a negative electrode or a positive electrode. A plate surface of the cap plate 800 may include a notch 810 for venting gas. The notch 810 may be in the vent region.

Referring to FIG. 2, the notch 810 may be at an inner plate surface of the cap plate 800 in the vent region (i.e., the notch 810 may be in a surface facing the electrode assembly 200). The notch 810 may be a V-shaped groove in cross-section. In plan view, the notch 810 may be a circular groove in the cap plate 800. The notch 810 may serve as a safety vent configured to rupture and to allow internal gas to escape from the secondary battery 10 in response to the pressure in the secondary battery 10 reaching a predetermined level (a predetermined pressure) or higher. Because the notch 810 is circular in plan view, the diameter of the notch 810 may be defined by the length between left and right notch parts 810 shown in FIG. 2.

Hereinafter, factors capable of reducing load during shaping of the crimping portion 124 and precision design measures to control the factors will be described.

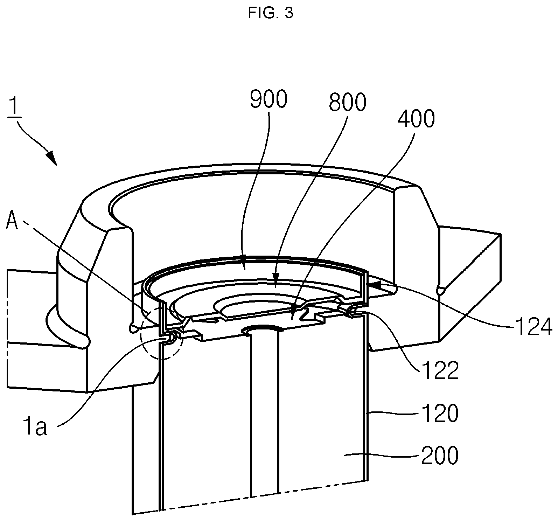

FIG. 3 is a partial perspective view showing a crimping process included in a process of manufacturing the cylindrical secondary battery 10 shown in FIG. 1.

A crimping jig 1 will be briefly described with reference to FIG. 3.

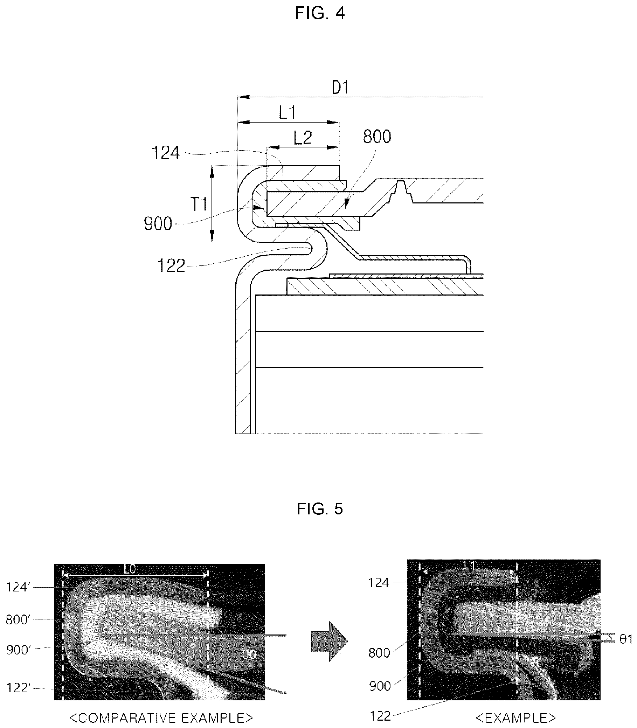

The crimping jig 1 used in the crimping process may include a protrusion 1a configured to be inserted into the beading portion 122 of the can 100 and to support the beading portion 122. In the state in which the protrusion 1a is inserted into the beading portion 122, an upper jig (not shown) may press an upper end of the side portion 120 of the can 100. The upper end of the side portion 120 may be bent (e.g., radially inward) toward the center of the can 100 to shape the crimping portion 124. In one or more embodiments, in a cylindrical secondary battery having an outer diameter of 46 ϕ (pi, mm), the shaping pressure of the crimping portion may reach approximately 6.7 to approximately 7.7 tons. If continuous (or substantially continuous) pressure is applied to the crimping jig 1, fatigue failure due to cumulative stress may occur first in region A. Region A is a region including the protrusion 1a and a step located in the vicinity thereof. Region A region may protrude further than the other parts of the crimping jig 1 and therefore region A may be most affected by fatigue stress. If region A is damaged, the beading portion 122 may not be stably supported, and therefore the crimping portion 124 may not be shaped into the desired shape. The beading portion 122 or the crimping portion 124 may be stabbed or scratched. Shaping pressure may be excessively applied to the cap plate 800, whereby the cap plate 800 may be deformed (see a comparative example in FIG. 5). Deformation of the cap plate 800 may cause damage to the notch 810 and a decrease in rupture pressure. In order to address this issue, factors such as the overlap length of the crimping portion 124, change of a force point and a support point during shaping, and the indentation depth of the beading portion 122 may be controlled.

Hereinafter, factors that affect preventing (or at least mitigating) damage to the crimping jig 1 and a method of controlling the same will be described.

FIG. 4 is an enlarged sectional view showing a part of the cylindrical secondary battery shown in FIG. 2. FIG. 5 is an enlarged view of a part of the cylindrical secondary battery to which design considerations of the crimping portion shown in FIG. 4 are applied.

FIG. 4 shows a portion of each of the beading portion 122, the crimping portion 124, and the cap plate 800 in an embodiment in which the outer diameter of the cylindrical secondary battery 10 (alternatively referred to as the outer diameter of a cell or the outer diameter of the can, hereinafter D1) is 46 ϕ (pi, mm). In FIG. 4, L1 is referred to as the amount of coverage, which means the length between opposite ends of the crimping portion 124, i.e., the length from the point of the crimping portion starting to be bent from the side portion 120 to the end of the crimping portion. L2 is referred to as the overlap length, which means the length of the section where the crimping portion 124 covers the cap plate 800 so as to overlap the cap plate. T1 is referred to as the engagement thickness, which means the height (length) from an outer upper end to a lower end of the crimping portion 124 coupled to the cap plate 800. The amount of coverage L1 and the overlap length L2 are lengths in an outer diameter direction (i.e., a radial direction) of the cell.

The amount of coverage L1 may be associated with a force point of the crimping portion 124 to which load is applied during shaping. As the amount of coverage L1 increases, the force point to which force is applied during shaping may be shifted toward the center of the cap plate 800. The more the force point moves toward the end of the protrusion 1a of the crimping jig 1, the more shaping load may be transferred to the cap plate 800. As a result, a higher shaping load may be transferred to the protrusion 1a and the cap plate 800, resulting in deformation of the protrusion 1a and the cap plate 800. As the amount of coverage L1 decreases, the force point to which force is applied during shaping may be shifted toward the can 100, which is the outside of the cap plate 800. Because the force point is shifted outwardly of the protrusion 1a of the crimping jig 1, much more shaping load may be transferred to a body of the crimping jig 1 and the side portion 120 of the can 100. As a result, the protrusion 1a and the cap plate 800 may be barely deformed.

FIG. 5 shows a comparative example having an amount of coverage L0 of approximately 4.5 mm and an embodiment of the present disclosure having an amount of coverage L1 of approximately 2.96 mm. In the comparative example, the cap plate 800 may be deformed by the shaping load. The amount of deformation θ0 may be represented by an angle, and it can be seen that the cap plate 800 is inclined by about (approximately) 13 to about (approximately) 16 degrees compared to the case in which the cap plate 800 is not deformed. However, it can be seen that the cap plate 800 according to the example of the present disclosure has an amount of deformation θ0 of less than 10 degree and for example about (approximately) 4 to about (approximately) 6 degrees, which is about (approximately) a 60% reduction in deformation compared to the comparative example. As such, the position of the force point may be changed during shaping of the crimping portion 124, whereby the shaping load may be reduced and deformation of the crimping jig 1 and the cap plate 800 may be prevented (or at least mitigated against). Even if the shaping load is reduced to approximately 6.0 to approximately 6.2 tons compared to the comparative example (approximately 6.7 to approximately 7.7 tons), the crimping portion 124 may be normally shaped. Consequently, it is possible to reduce the shaping load.

If the amount of coverage L1 is too large, the cap plate 800 may be excessively deformed due to the shift of the force point, as described above. If the amount of coverage L1 is too small, the crimping portion 124 may be easily lifted and opened if the internal pressure of the secondary battery increases, resulting in uncrimping that fails to fix the cap plate 800. Consequently, the amount of coverage L1 may be controlled to be within an appropriate range.

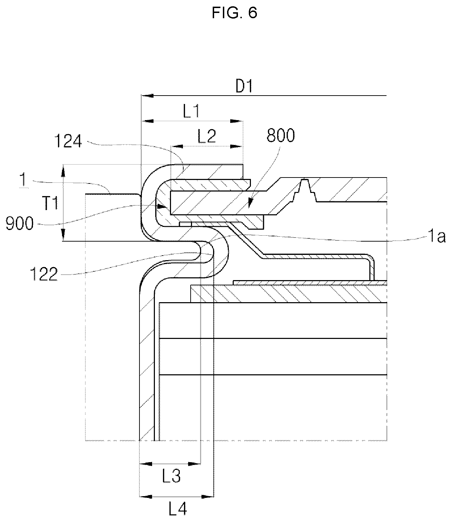

FIG. 6 is an enlarged sectional view showing a part of the cylindrical secondary battery during the crimping process shown in FIG. 3.

FIG. 6 shows a portion of each of the beading portion 122, the crimping portion 124, and the cap plate 800 in an embodiment in which the outer diameter D1 of the cylindrical secondary battery 10 is 46 ϕ. In FIG. 6, the amount of coverage L1, the overlap length L2, and the engagement thickness T1 are the same factors as in FIG. 4, and therefore a detailed description thereof will be omitted. L3 is the length of the protrusion 1a of the crimping jig 1, and is referred to as a support length because the protrusion is a part configured to support the beading portion 122. L4 is the indentation depth of the beading portion 122. The support length L3 and the indentation depth L4 are lengths in the outer diameter direction (i.e., radial direction) of the cell.

If the support length L3 is too large (e.g., if the support length L3 is greater than the indentation depth L4), the protrusion 1a of the crimping jig 1 may be caught in the beading portion 122 during the crimping process. If the cylindrical secondary battery 10 is separated from the crimping jig 1, therefore, the cylindrical secondary battery may be damaged, e.g., scratched. If the support length L3 is too small, the support area may be reduced, and the shaping load may not be sufficiently supported. As a result, the protrusion 1a of the crimping jig 1 and the periphery thereof may be damaged by excessive load. Consequently, the support length L3 may be controlled to be within an appropriate range.

Hereinafter, with reference again to Figures 4 and 6, the range of each element to address the aforementioned issue(s) will be described with reference back to FIGs. 4 and 6. The range of each element will be described based on an embodiment in which the outer diameter D1 of the cylindrical secondary battery 10 is 46 ϕ.

The engagement thickness T1 of the crimping portion 124 may be approximately 5 to approximately 8% of the outer diameter D1 of the cylindrical secondary battery 10 (ratio R1=T1/D1). The support length L3 of the protrusion 1a of the crimping jig 1 may be approximately 60% to approximately 90% of the amount of coverage L1 of the crimping portion 124 (ratio R2=L3/L1). The support length L3 of the protrusion 1a of the crimping jig 1 may be approximately 3 to approximately 9% of the outer diameter D1 of the cylindrical secondary battery 10 (ratio R3=L3/D1). The support length L3 of the protrusion 1a of the crimping jig 1 may be approximately 73% to approximately 83% of the indentation depth L4 of the beading portion 122 (ratio R4=L3/L4). These ratios may vary proportionally depending on the outer diameter of the cylindrical secondary battery 10 and the indentation depth of the beading portion 122.

According to the embodiment of the present disclosure, the shaping load may be reduced by controlling the design elements of the crimping portion, thereby preventing (or at least mitigating) damage to shaping equipment due to cumulative load stress. According to the embodiment of the present disclosure, the shaping load of the crimping portion may be reduced to prevent (or at least mitigate) deformation of the cap plate. Consequently, the safety of the secondary battery may be increased. According to the embodiment of the present disclosure, damage to the crimping portion shaping equipment may be prevented (or at least mitigated), thereby preventing (or at least mitigating) the surface of the crimping portion from being stabbed or scratched during shaping of the crimping portion. Consequently, quality of the secondary battery may be increased.

As is apparent from the above description, according to embodiments of the present disclosure, design elements of a crimping portion may be controlled such that shaping load is reduced, whereby it is possible to prevent (or at least mitigate) damage to shaping equipment due to cumulative load stress.

According to embodiments of the present disclosure, the shaping load of the crimping portion may be reduced, whereby it is possible to prevent (or at least mitigate) deformation of a cap plate. Consequently, safety of a secondary battery may be increased.

According to embodiments of the present disclosure, damage to the crimping portion shaping equipment may be prevented (or at least mitigate), whereby it is possible to prevent (or at least mitigate) the surface of the crimping portion from being stabbed or scratched during shaping of the crimping portion. Consequently, quality of the secondary battery may be increased.

The above is only an embodiment for implementing the present disclosure, the present disclosure is not limited to the above embodiment, and a person having ordinary skill in the art to which the present disclosure pertains will recognize that various modifications can be made without departing from the gist of the present disclosure as claimed.

### List of reference signs

- 1: Crimping jig
- 1a: Protrusion
- 10: Secondary battery
- 100: Can
- 110: Upper surface portion
- 120: Side portion
- 122: Beading portion
- 124: Crimping portion
- 200: Electrode assembly
- 210: First electrode plate
- 220: Second electrode plate
- 230: Separator
- 300: First current collector plate
- 400: Second current collector plate
- 450: Negative electrode lead
- 500: Insulating member
- 600: Positive electrode terminal
- 700: First gasket
- 710: Upper gasket
- 720: Lower gasket
- 800: Cap plate
- 810: Notch
- 900: Second gasket
- A: region
- D1: outer diameter
- T1: engagement thickness
- L0: amount of coverage
- L1: amount of coverage
- L2: overlap length
- L3: support length
- L4: indentation depth

- θ0, 1: amount of deformation

## Claims

1. A method for affixing a cap plate (800) to a can (100) of a cylindrical secondary battery (10), wherein a beading portion (122) is formed in the can (100), and the cap plate (800) is placed on the beading portion (122) and is affixed by bending an end of a side portion (120) of the can (100) in the inward direction to form a crimping portion (124), wherein the method comprises
inserting a protrusion (1a) into the beading portion (122) prior to cramping the crimping portion (124), wherein a support length (L3) of the protrusion (1a) inserted into the beading portion (122) is approximately 73% to approximately 83% of an indentation depth (L4) of the beading portion (122) in an outer diameter direction of the cylindrical secondary battery (10).

2. A crimping apparatus configured to form a crimping portion (124) in a cylindrical secondary battery (10), the crimping apparatus in particular being adapted to perform the method of claim 1 by comprising a protrusion (1a) configured to be inserted into a beading portion (122) of the cylindrical secondary battery (10), wherein
a support length (L3) of the protrusion (1a) inserted into the beading portion (122) is approximately 73% to approximately 83% of an indentation depth (L4) of the beading portion (122) in an outer diameter direction of the cylindrical secondary battery (10).

3. A cylindrical secondary battery (10) manufactured by the crimping apparatus as claimed in claim 2, in particular wherein the crimping apparatus performs the method of claim 1, wherein the cap plate (800) has an amount of deformation (θ1), the deformed cap plate (800) forming an angle to the previously undeformed cap plate (800) of less than 10 degree.

4. The cylindrical secondary battery (10) as claimed in claim 3, comprising:
an electrode assembly (200);
a cylindrical can (100) comprising a circular upper surface portion (110) and a side portion (120) extending from the circular upper surface portion (110), the side portion (120) comprising the beading portion (122) adjacent to an end of the side portion (120) and inwardly recessed and the crimping portion (124) at the end of the side portion (120), the cylindrical can (100) accommodating the electrode assembly (200); and
a cap plate (800) coupled between the beading portion (122) and the crimping portion (124) in an insulated state.

5. The cylindrical secondary battery (10) as claimed in claim 4, further comprising a gasket (900) between the cap plate (800) and the crimping portion (124), the gasket (900) insulating the cap plate (800) from the side portion (120), the gasket (900) comprising an insulating material.

6. The cylindrical secondary battery (10) as claimed in claim 5, wherein an engagement thickness (T1) of the crimping portion (124) is approximately 5% to approximately 8% of an outer diameter (D1) of the cylindrical can (100), the engagement thickness (T1) being a height of the crimping portion (124) from an outer upper end to a lower end of the crimping portion (124).

7. The cylindrical secondary battery (10) as claimed in claim 5 or 6, wherein a support length (L3) of the protrusion (1a) is approximately 60% to approximately 90% of an amount of coverage (L1), the amount of coverage (L1) being a length between opposite ends of the crimping portion (124).

8. The cylindrical secondary battery (10) as claimed in claim 7, wherein the support length (L3) of the protrusion (1a) is approximately 3% to approximately 9% of an outer diameter (D1) of the cylindrical can (100).

9. The cylindrical secondary battery (10) as claimed in claim 5 or 6, wherein a support length (L3) of the protrusion (1a) is approximately 3% to approximately 9% of an outer diameter (D1) of the cylindrical can (100).

10. The cylindrical secondary battery (10) as claimed in any of claims 4 to 9, wherein:
the electrode assembly (200) comprises a first electrode plate (210) and a second electrode plate (220), and
the cylindrical secondary battery (10) further comprises a positive electrode terminal (600) coupled to the circular upper surface portion (110) in an insulated state, the positive electrode terminal (600) being electrically connected to the first electrode plate (210).

11. The cylindrical secondary battery (10) as claimed in claim 10, further comprising:
a first current collector plate (300) electrically connected to the first electrode plate (210) and the positive electrode terminal (600); and
a second current collector plate (400) electrically connected to the second electrode plate (220) and the side portion (120).

12. The cylindrical secondary battery (10) as claimed in claim 11, further comprising a plurality of negative electrode leads (450) electrically connecting the second current collector plate (400) and the side portion (120) to each other.
